# FASCICULE DE BREVET EUROPEEN

(11) **EP 3 723 280 B1**
(45) Date de publication et mention de la délivrance du brevet: **15.02.2023**
(21) Numéro de dépôt: 20168177.2
(22) Date de dépôt: 06.04.2020
(51) Int. Cl.: H02S 20/22, F24S 30/425, F24S 20/63

(54) **VOLET OSCILLANT À CONVERSION ÉNERGÉTIQUE SOLAIRE**
SCHWENKKLAPPE MIT SOLARENERGIE-UMWANDLUNG
OSCILLATING SHUTTER WITH SOLAR ENERGY CONVERSION

(30) Priorité: 12.04.2019 FR 1903918
(43) Date de publication de la demande: 14.10.2020
(73) Titulaire: Cruchon, Jean Claude, 59123 Bray Dunes (FR)
(72) Inventeur: Cruchon, Jean Claude, 59123 Bray Dunes (FR)
(74) Mandataire: Nicolle, Olivier

(56) Documents cités:
- DE-U1- 29 614 742
- JP-A- 2010 144 456
- KR-B1- 101 797 897
- US-A- 4 184 295
- US-A1- 2009 032 100
- US-A1- 2017 336 104

## Description

La présente invention concerne un volet oscillant à conversion énergétique solaire pour fenêtre de bâti.

On entend par « fenêtre de bâti », toute ouverture de bâti tel qu'une fenêtre, un porte fenêtre ou une baie vitrée, et on entend par volet toute structure occultante apte à être superposée à une ouverture de bâti afin de limiter la luminosité incidente.

On connait déjà des volets oscillants à conversion énergétique solaire. Par exemple dans le document WO 01/88312 A1, on a décrit un volet oscillant comportant un cadre susceptible de recevoir sur l'une au moins de ses deux faces principales un capteur thermique. Le cadre est orientable et articulé au niveau d'une fenêtre par une barre d'articulation horizontale. L'orientation du volet est réalisée au moyen d'un organe actionneur selon une progression pas à pas ou continue en synchronisme avec la course du soleil.

Sauf s'il est positionné selon une orientation plein Sud, un tel volet de l'art antérieur a l'inconvénient de ne percevoir qu'une partie de l'éclairement solaire dans la mesure où il est généralement masqué par les structures en surplomb créant des ombres portées sur ledit volet. Ces ombres portées réduisent considérablement l'exposition de tout moyen de conversion d'énergie solaire ainsi que le rendement énergétique associé.

De plus, les volets oscillants proposent généralement un rattachement direct du cadre à la partie supérieure d'une fenêtre. Ils décrivent une articulation directe entre le cadre du volet et la fenêtre sur laquelle ledit volet est fixé, ce qui empêche la création d'un espace interstitiel suffisant entre le volet et le bâti. La capacité de refroidissement de ces volets ne peut donc être optimisée afin de garantir l'intégrité structurelle dudit volet.

De même, les dispositifs à cadres et charnières proches des rebords de fenêtre, souvent commandés par vérins à gaz, n'offrent pas non plus de garanties de résistance aux aléas climatiques car les charnières et les vérins à gaz ne sont pas généralement conçus pour résister aux efforts importants des zones climatiques définies par la norme EUROCODE EN 1991-1-4/N.

La présente invention remédie à ces inconvénients.

Le document US 2017/336104 A1 divulgue un volet oscillant selon le préambule de la revendication 1.

Elle porte sur un volet oscillant comprenant :
- un volet destiné à occulter au moins partiellement une fenêtre de bâti et apte à supporter au moins un cadre équipé d'au moins un module de conversion d'énergie solaire ; et
- des moyens d'oscillation angulaire dudit cadre par rapport à l'exposition solaire.

Selon une définition générale de l'invention, les moyens d'oscillation angulaire comprennent au moins un bras porteur supportant ledit cadre, et dont l'une des extrémités est articulée en pivot autour d'une barre d'articulation horizontale selon l'axe horizontal Z, ladite barre d'articulation étant fixée à un bâti de fenêtre et déportée verticalement par rapport à l'axe vertical Y, selon une relation géométrique choisie par rapport audit haut du tableau de la fenêtre, de manière à réduire l'ombre portée sur ledit module de conversion d'énergie solaire grâce à la projection dudit cadre selon un axe horizontal X.

Selon un mode de réalisation conforme à l'invention, les moyens d'oscillation comprennent en outre au moins un organe actionneur intégrant un mécanisme d'entrainement apte à provoquer l'oscillation angulaire dudit cadre de manière séquentielle ou continue selon le plan géométrique d'oscillation XY.

En pratique, l'organe actionneur appartient au groupe formé par : vérin électrique, vérin à vis sans fin, crémaillère, crémaillère latérale, de vis trapézoïdales, chaînes, courroie et câbles entrainé à partir d'au moins un actionneur de type : moteur à courant continu, moteur à courant alternatif, moteur pas-à-pas, manivelle manuelle ou servomoteur.

Selon un autre mode de réalisation conforme à l'invention, l'organe actionneur est équipé d'un moteur débrayable apte à permettre l'orientation manuelle dudit volet oscillant.

Avantageusement, il est prévu en outre au moins un inclinomètre apte à indiquer l'inclinaison dudit cadre par rapport à un plan géométrique choisi.

En pratique, le module de conversion d'énergie solaire est de type panneau photovoltaïque.

En alternative, le volet oscillant comprend au moins deux bras porteurs disposés parallèlement l'un par rapport à l'autre et reliés par au moins une entretoise disposée perpendiculairement auxdits deux bras porteurs.

Le volet conforme à l'invention comprend en outre des moyens de fixation disposés selon une relation géométrique choisie par rapport audit haut du tableau de la fenêtre, et aptes à recevoir la barre d'articulation horizontale destiné à être articulé avec l'une des extrémités dudit bras porteur.

Selon un mode de réalisation de l'invention, le volet comprend au moins un moyen actionneur de type vérin, dont l'une des extrémités est fixée au cadre, et une autre extrémité, mobile, configurée pour être fixée à au moins un organe coulissant sur le cadre du volet ledit organe coulissant comprenant une partie mobile configurée pour rouler sur un rail formé par l'intérieur du cadre et solidaire de l'extrémité mobile du moyen actionneur , et une partie pivot apte à recevoir au moins un organe de support.

En pratique, l'organe de support comprend une structure en deux parties donc la première est longiligne, et la seconde partie est perpendiculaire et solidaire de la première, formant ainsi une équerre, et apte à être montée sur la partie pivot de l'organe coulissant.

A titre d'exemple, la barre d'articulation horizontale du volet oscillant selon l'invention est déportée horizontalement selon l'axe X.

Selon un mode de réalisation de l'invention, le volet comprend en outre au moins un organe de support comportant une première extrémité, formant pivot, et solidaire du haut du tableau de fenêtre.

Alternativement, le volet oscillant selon l'invention comprend au moins un organe de support comportant une première extrémité, formant pivot, et solidaire d'un point choisi sur les parois latérales du tableau de fenêtre.

Le volet oscillant selon l'invention est défini en ce que la relation géométrique choisie correspond à une distance de 40cm entre le centre d'oscillation et la partie haute du tableau de fenêtre 7 pour une fenêtre de type standard.

Enfin, ledit volet oscillant conforme à l'invention dispose d'une capacité d'oscillation angulaire du cadre comprise entre 0° et 120° selon le plan géométrique d'oscillation.

Ainsi, le volet oscillant conforme à l'invention est simple d'utilisation, maximise l'exposition solaire sur les modules de conversion d'énergie solaire, de manière à ce que la production énergétique soit optimisée, et comprend en outre une structure renforcée apte à résister aux conditions météorologiques et de température auxquelles le volet est normalement soumis.

De manière surprenante, le Demandeur a observé que le volet oscillant conforme à l'invention offre avantageusement non seulement une amélioration du refroidissement par convection naturelle mais permet aussi l'augmentation de l'espace interstitiel entre le volet et le bâti, facilitant le refroidissement.

D'autres avantages et caractéristiques de l'invention apparaitront à l'examen de la description et des dessins dans lesquels :
**[****Fig 1****]** représente schématiquement les éléments constitutifs d'un volet oscillant de l'art antérieur ;
**[****Fig 2****]** représente schématiquement de mode de fonctionnement ainsi que les caractéristiques d'installation du volet oscillant selon l'invention ;
**[****Fig 3****]** représente schématiquement un premier mode de réalisation de volet oscillant conforme à l'invention en position projetée ;
**[****Fig 4****]** représente schématiquement un second mode de réalisation de volet oscillant, sur structure autoporteuse, comportant deux bras porteurs conforme à l'invention ;
**[****Fig 5****]** représente schématiquement une vue éclatée des éléments du volet oscillant conforme à l'invention ;
**[****Fig 6****]** représente schématiquement un mode de réalisation alternatif avec un organe actionneur particulier, conformément à l'invention ;
**[****Fig 7****]** représente schématiquement un mode de réalisation alternatif comportant trois bras porteurs, conformément à l'invention ;
**[****Fig 8****]** représente schématiquement un mode de réalisation alternatif comportant une structure avec équerre conforme à l'invention ; et
**[****Fig 9****]** représente schématiquement un mode de réalisation alternatif du mode de réalisation présenté en figure 8, conforme à l'invention.

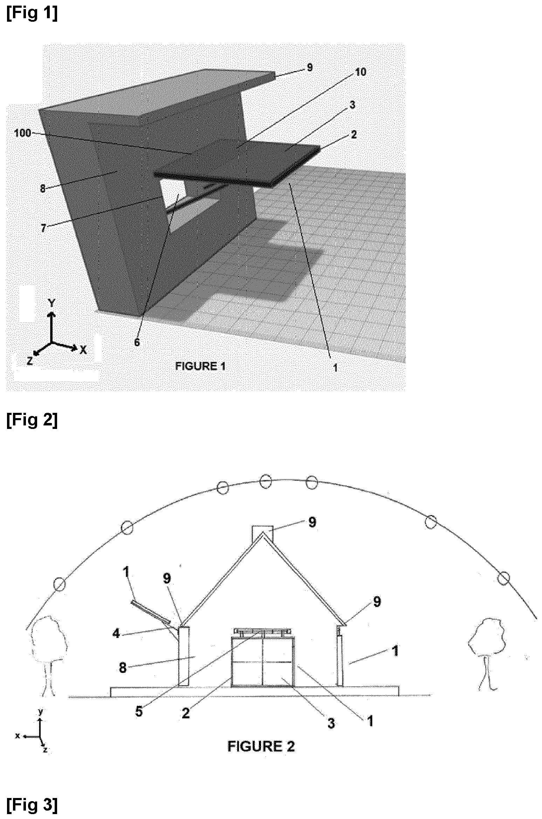

En référence à la **figure 1****,** un dispositif de volet oscillant de l'art antérieur, par exemple tel que celui décrit dans WO 01/88312 A1, comprend un volet 1 équipé d'un cadre 2, apte à supporter au moins un module de conversion d'énergie solaire 3. Le cadre 2 est orientable et articulé au niveau de la fenêtre 6 d'un bâti 8 par une barre d'articulation horizontale selon l'axe Z avec des moyens d'articulation et de fixation 100, lesquels permettent l'oscillation du cadre 2 selon un plan XY aussi appelé plan d'oscillation d'un repère orthonormé XYZ. L'articulation s'effectue directement entre le cadre 2 et les moyens d'articulation et de fixation 100. Le cadre 2 est positionné de manière à ce que l'extrémité proximale du cadre 2 par rapport au bâti 8 soit adjacente à la partie haute du cadre de fenêtre 7.

Comme déjà décrit ci-avant, la position adjacente de l'extrémité proximale du cadre 2 par rapport au bâti 8, ainsi qu'au tableau de fenêtre 7, décrit une relation géométrique selon laquelle une partie de la surface active du module de conversion d'énergie solaire 3 est positionnée directement en dessous d'éléments de surplombs 9 du bâti 8 susceptibles de masquer au moins une partie du volet lors de son oscillation par la création d'ombres portées.

A titre d'exemple, les éléments de surplombs 9 peuvent non limitativement être une toiture, une gouttière, une cheminée. La position de ces éléments de surplomb 9 induit donc des ombres portées 10 sur au moins une partie de ladite surface active du module de conversion d'énergie solaire 3 en cas d'ensoleillement.

En référence aux **figures 2 à 3** le volet oscillant 1 selon l'invention est destiné à occulter au moins partiellement une fenêtre 6 intégrée dans un tableau de fenêtre 7 et positionnée sur un bâti 8.

Le volet oscillant 1 est apte à supporter un cadre 2, équipé d'au moins un module de conversion d'énergie solaire 3 et comprend en outre des moyens d'oscillation angulaire 5, permettant l'oscillation dudit cadre 2 par rapport à un bâti 8, selon un plan XY dit d'oscillation d'un repère orthonormé XYZ, au moyen d'au moins un bras porteur 4.

Le volet oscillant 1 selon l'invention comporte une première position dite fermée, dans laquelle ledit cadre 2 est disposé selon un plan parallèle au plan YZ aussi appelé plan vertical, et recouvre au moins en partie la fenêtre 6. La position fermée du volet 1 présente un différentiel angulaire égal (ou légèrement supérieur) à 0° par rapport au plan vertical formé par le bâti 8.

A l'aide des moyens oscillants 5, le volet 1 oscille dans le plan d'oscillation, décrivant une seconde position variable dite ouverte. Le cadre 2 présente alors un différentiel angulaire dont la valeur est comprise entre une première valeur supérieure à 0°, et jusqu'à 120° par rapport à ladite position fermée.

L'oscillation angulaire du volet 1 peut être effectuée de manière séquentielle ou continue selon le plan géométrique d'oscillation.

La surface active du module de conversion d'énergie solaire 3 dudit cadre 2, est alors projetée lorsque le volet 1 est en position ouverte selon un axe de projection X, aussi appelé axe de projection, déportant ladite surface active du module de conversion d'énergie solaire 3 horizontalement, et permet ainsi de minimiser les ombres portées 10 créées par les éléments en surplomb 9 du bâti 8.

Non limitativement, le module de conversion d'énergie solaire 3 appartient au groupe formé par panneau photovoltaïque. La structure active du module de conversion d'énergie solaire 3 peut être adaptée de manière à modifier la transparence dudit volet 1, et plus particulièrement lorsque le module de conversion d'énergie solaire 3 est de type panneau photovoltaïque.

En pratique, la structure du module de conversion d'énergie solaire 3 de type panneau photovoltaïque peut être de type cadré opaque, panneau à transparence partielle, panneau à bi verre enchâssés, à transparence passive ou mixte avec panneau à caches en métal, panneau à caches en verre blindé, panneau à caches colorés, panneau à caches miroir sans teint ou matériaux de synthèse.

En référence aux **figures 3 à 5****,** le volet oscillant 1 comprend au moins un bras porteur 4 dont une première extrémité 42 supporte le cadre 2, et fixé à l'aide de moyens d'ancrage de type vis. Le bras porteur 4 comprend une seconde extrémité apte à s'articuler en pivot avec une barre d'articulation horizontale 52 à l'aide de moyens de liaison (non représentés). Le bras porteur 4 s'étend selon une longueur prédéfinie permettant la projection du cadre 2 lors de l'oscillation du volet 1.

Les moyens d'oscillation 5 comprennent ladite barre d'articulation horizontale 52, laquelle est en outre fixée sur le bâti 8 par montage sur des moyens de fixation 51, selon un axe horizontal Z du repère orthonormé XYZ, appelé axe horizontal.

Les moyens de fixation 51 de la barre d'articulation horizontale 52 sont fixés au bâti 8 selon une relation géométrique particulière par rapport au haut du tableau de fenêtre 7, et forment un déport entre le haut du tableau de fenêtre 7 et le centre d'oscillation dudit volet 1 constitué par la barre d'articulation horizontale 52. Le déport est formé par projection du cadre 2 au moyen d'au moins un bras porteur 4 d'une longueur prédéfinie, les moyens de fixations 51 au bâti 8 étant déportés du haut de dudit tableau de fenêtre 7 de manière à ce que la longueur prédéterminée séparant ces mêmes moyens de fixation 51 et le haut du tableau de fenêtre 7 soit au moins égale à la longueur dudit bras porteur 4 entre la barre d'articulation horizontale 52 et le bord du cadre 2.

A titre d'exemple conforme à l'invention, la surface du bâti 8 sur laquelle se situent les moyens de fixation 51 peut non limitativement être sur un mur quasi-vertical, sous un surplomb horizontal ou sur un support spécifique encastré dans ledit bâti 8, chaqu'une de ces positions étant disposée au-dessus de la partie haute du tableau de fenêtre 7.

Les moyens de fixation 51 appartiennent non limitativement au groupe : cadre autoporteur de l'axe d'oscillation, pivots.

Ces moyens de fixation permettent une meilleure répartition des contraintes mécaniques, par allègement des efforts sur le bâti 8.

A titre d'exemple particulier, la relation géométrique correspond à une distance de 40 cm entre le centre d'oscillation, définit par la position de la barre d'articulation horizontale 52, et la partie haute du tableau de fenêtre 7 pour une fenêtre de type standard pour une hauteur de plafond égale à 2,5 m.

La distance entre la partie haute du tableau de fenêtre 7 et la barre d'articulation horizontale 52 forme un déport, et est établie en fonction de l'orientation du bâti 8 ainsi que les tailles et distances des éléments de surplomb 9. La barre d'articulation horizontale 52 doit être montée de manière à permettre la rotation de l'extrémité du bras porteur 4, et se retrouve projeté selon l'axe de projection X.

A titre d'exemple non limitatif, la distance entre le bâti 8 et la barre d'articulation horizontale est de 10cm.

En pratique, la distance entre le centre d'oscillation, définit par la position de la barre d'articulation horizontale 52, et la partie haute du tableau de fenêtre 7 pour une fenêtre de type standard de hauteur de plafond de 2,5 m et d'au moins 30 cm afin de permettre une projection efficace du cadre 2.

Selon un mode de réalisation conforme à l'invention, les moyens oscillant 5 comprennent au moins un organe actionneur 53, comportant un mécanisme d'entrainement 531 apte à provoquer l'oscillation angulaire dudit cadre 2 selon un plan prédéfini d'oscillation.

Les mécanismes d'entrainement 531 dudit organe actionneur 53 appartiennent au groupe non limitativement formé par un vérin électrique, un vérin à vis sans fin, une crémaillère, un mécanisme à vis trapézoïdales chaînes, courroie et câbles. Ces mécanismes d'entrainement 531 sont entrainés à partir d'au moins un organe actionneur 53 de type : moteur à courant continu, moteur à courant alternatif, moteur pas-à-pas, manivelle manuelle ou servomoteur.

Selon un mode de réalisation alternatif conforme à l'invention, l'organe actionneur 53 est équipé d'un moteur débrayable permettre à l'utilisateur d'orienter manuellement ledit volet oscillant.

Selon un autre mode de réalisation de l'invention, les moyens d'oscillation 5 comprennent au moins un organe de support 54, apte à supporter le cadre 2 durant l'oscillation par projection depuis au moins un point du tableau de fenêtre 7, jusqu'à au moins un point de support prédéterminé disposé sur ledit volet 1.

En pratique, le volet oscillant 1 est apte à être équipé d'au moins un inclinomètre (non représenté), permettant de mesurer l'inclinaison en temps réel dudit cadre 2 par rapport au plan d'oscillation, ainsi que le différentiel angulaire par rapport audit bâti 8.

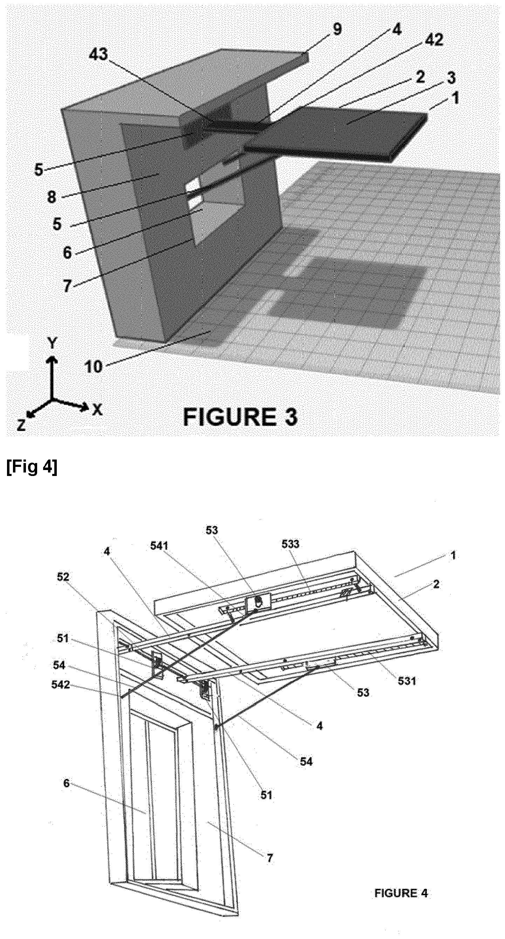

En référence à la **figure 4** le volet oscillant 1 comprend deux bras porteurs 4 parallèles l'un par rapport à l'autre, et supportant le cadre 2. Les extrémités 43 s'articulent avec ladite barre d'articulation horizontale 52. Des moyens actionneurs 53 sont fixés sur chacun des bras porteurs 4, lesdits bras porteurs 4 étant équipés de crémaillères 533. Selon un mode de réalisation conforme à l'invention, les crémaillères 533 sont positionnées latéralement le long desdits bras porteurs 4.

Au moins un organe de support 54 solidaire d'un moyen actionneur 53 mobile le long d'une crémaillère 533 par une première extrémité 541, et dont la seconde extrémité 542 est solidaire d'un point fixe dudit tableau de fenêtre 7.

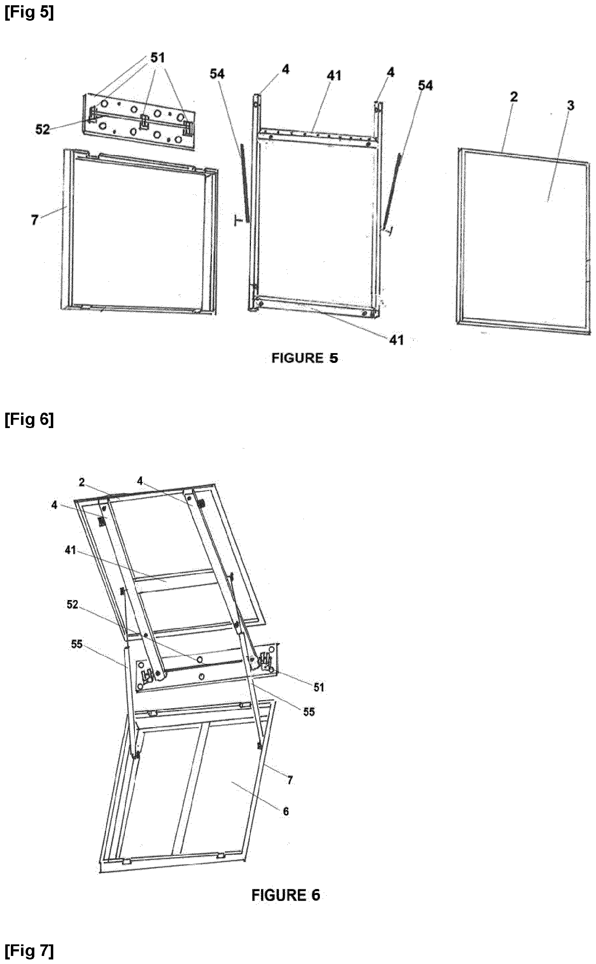

En référence à la **figure 6****,** le volet oscillant 1 est équipé de deux bras porteurs 4, portant ledit cadre 2, et positionnés parallèlement l'un par rapport à l'autre. Ces deux bras porteurs 4 sont reliés par au moins une entretoise 41, laquelle permet le maintien d'un écartement fixe entre les deux bras porteurs 4, ainsi que le renforcement de la structure supportant le cadre 2.

Selon un mode de réalisation particulier de l'invention, le cadre 2 est muni d'une entretoise 41, ainsi que d'au moins un joint élastique (non représenté). Le joint élastique est indispensable à la sustentation du module de conversion d'énergie solaire 3 lorsque le volet 1 est en position fermée, permet en outre de limiter les dilatations thermiques dudit volet 1 et assurer la planéité du plan de report.

Selon un autre mode de réalisation conforme à l'invention, l'organe de support 54 dispose d'une extrémité fixée sur au moins un élément équipant la face inférieure dudit cadre 2, cet élément appartenant au groupe formé par un organe actionneur 53, un bras porteur 4, une entretoise 41, et le cadre 2.

A titre d'exemple, le volet oscillant 1 selon la **[****Fig. 6****]** est équipé de deux vérins électriques 55 à translation longitudinal, chaque vérin disposant d'une première extrémité articulée sur le tableau de fenêtre 7, ainsi qu'une seconde extrémité articulée sur le bras porteur 4. Les vérins électriques 55 remplissent une double fonction, dont une fonction d'organe actionneur 53, laquelle garantie l'oscillation dudit volet 1, et d'autre part, une fonction de support 54 dudit cadre 2 lors de l'oscillation angulaire.

En référence à **la** **figure 7** le volet oscillant 1 est équipé d'au moins trois bras porteurs 4a, 4b, et 4c, fixés sur le cadre 2 de manière à ce que chaque bras porteur 4a, 4b et 4c soit positionné parallèlement par rapport aux autres, perpendiculaires à l'axe horizontal Z, et liées les uns aux autres par des entretoises 41. Selon un mode de réalisation particulier conforme à l'invention, le bras porteur 4b central est équipé d'une chaîne 534 associé à un motoréducteur, les deux bras porteurs latéraux 4a et 4c comprenant en outre un mécanisme de type glissière 532, apte à accueillir au moins un élément de guidage (non représenté). Les éléments de guidage (non représentés) sont disposés sur un longeron d'entrainement 41a disposé perpendiculairement aux bras porteurs 4a, 4b, et 4c et permettent le glissement dudit longeron 41a selon un axe prédéfini par l'orientation desdites glissières des bras porteurs 4a et 4c.

Le bras porteur central 4b, comporte un mécanisme d'entrainement 531, disposé le long dudit bras porteur 4b, et permet l'oscillation du volet oscillant 1 par actionnement au moyen dudit vérin à vis (non représenté) et de moyens motorisés 531a.

A titre d'exemple, le moyen motorisé 531a utilisé peut non limitativement être de type motoréducteur à courant continu ou pas à pas, lequel est fonction du type d'oscillation choisie.

Alternativement, le moyen motorisé 531a peut être de type vérin à vis (actuateur linéaire à vis motorisé) actionnant le bras porteur 4.

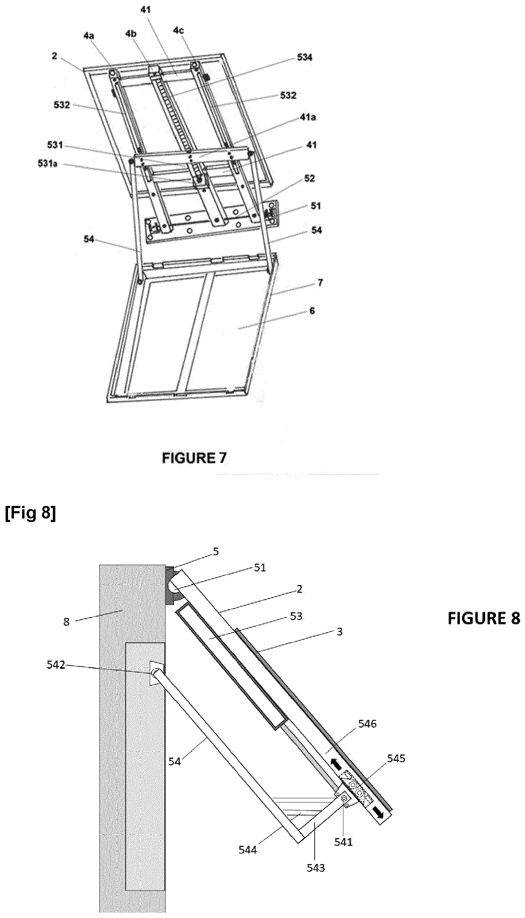

En référence à la **figure 8****,** selon un mode de réalisation particulier conforme à l'invention, le volet oscillant 1 comprend des moyens de fixation 51 déportés horizontalement de manière à créer un déport supplémentaire par rapport au bâti 8.

Le volet selon l'invention comprend donc un déport horizontal ainsi qu'un déport vertical, ce qui permet d'optimiser l'écart avec les possibles ombres portées susceptibles de venir diminuer la luminosité disponible sur le volet 1.

Le volet oscillant 1 est équipé de deux bras porteurs 4, portant ledit cadre 2, et positionnés parallèlement l'un par rapport à l'autre. Ces deux bras porteurs 4 sont reliés par au moins une entretoise 41, laquelle permet le maintien d'un écartement fixe entre les deux bras porteurs 4, ainsi que le renforcement de la structure supportant le cadre 2.

Le volet oscillant 1 comporte en outre au moins un moyen actionneur 53 de type vérin, dont l'une des extrémités est fixée au cadre 2, et une autre extrémité, mobile, configurée pour être fixée à au moins un organe coulissant 545.

L'organe coulissant 545 comprend une partie mobile configurée pour rouler dans un rail de guidage 546 formé par l'intérieur du cadre 2, et une partie pivot apte à recevoir au moins un organe de support 54.

Alternativement, le volet 1 comprend au moins deux organes coulissants 545, ainsi qu'une entretoise (non représentée) reliant les parties pivot de deux organes coulissants 545, disposés de chaque côté du cadre 2 du volet 1, ladite entretoise (non représentée) étant solidaire de l'extrémité mobile du moyen actionneur 53, selon une position centrale.

Une telle configuration permet de la transformation d'un mouvement linéaire en mouvement sectoriel de l'entretoise (non représentée), par contrainte de déplacement de l'organe coulissant 545 dans les rails de guidage 546.

En pratique, l'entretoise (non représentée est réalisée par un assemblage de tubes engagés les uns dans les autres, permettant ainsi de renforcer la structure finale, tout en conservant l'élasticité de l'entretoise (non représentée) ainsi formée.

L'organe coulissant 545 peut être de type chariot à roues.

Le volet oscillant 1 selon l'invention comprend en outre au moins un organe de support 54 comportant une première extrémité 541, formant pivot, et solidaire d'un point choisi sur le tableau de fenêtre 7, de manière à créer un déport par rapport à l'axe de rotation des bras porteurs 4 du volet oscillant 1 sur le haut du tableau de fenêtre 7, et ainsi permettre de supporter le poids dudit volet 1 lors de l'opération de déploiement de celui-ci.

L'organe de support 54 comprend une structure en deux parties donc la première est longiligne, et la seconde partie est perpendiculaire et solidaire de la première, formant ainsi une équerre 543, et relié à l'organe coulissant 545. L'équerre 543 comprend en outre au moins une barre de renfort 544, apte à rigidifier la structure.

L'équerre 543 de l'organe de support 54 comprend ensuite une extrémité libre apte à être montée sur la partie pivot de l'organe coulissant 545, et apte à pivoter lors du déploiement et du repliement du volet oscillant 1.

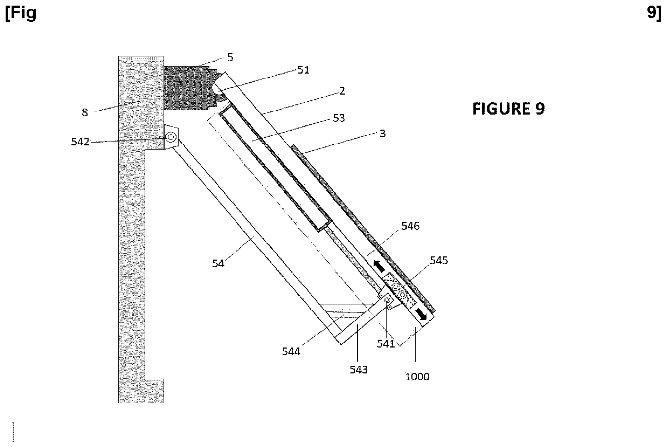

En référence à la **figure 9****,** le volet oscillant 1 définit une variante de réalisation du mode de réalisation selon la **figure 8****,** et comprend des moyens de fixation 51 déportés horizontalement de manière à créer un déport supplémentaire par rapport au bâti 8.

Le volet oscillant 1 selon l'invention comprend en outre au moins un organe de support 54 comportant une première extrémité 541, formant pivot, et solidaire du haut du tableau de fenêtre 7, de manière à créer un déport par rapport à l'axe de rotation des bras porteurs 4 du volet oscillant 1 comportant un déport supplémentaire, et ainsi permettre de supporter le poids dudit volet 1 lors de l'opération de déploiement de celui-ci.

En pratique, le volet 1 selon l'invention comprend en outre un cache 1000, disposé latéralement au volet 1 de manière à permettre l'occlusion de l'espace entre ledit volet 1 et le tableau de fenêtre 7 et ainsi bloquer au moins partiellement la lumière incidente. Selon les panneaux solaires disponibles, un cache transparent 1000, ou non, peut aussi être disposé pour occulter l'espace libre entre l'axe pivot (3) et le haut du panneau (51) pour protéger des intempéries l'intérieur dudit volet 1.

Ces modes de réalisation particuliers permettent de mieux répartir le poids du volet 1 tout en permettant la projection du volet 1 par raccourcissement du moyen actionneur.

Selon un mode particulier de réalisation, le volet 1 selon l'invention peut être mis en mode verrouillage selon un angle choisi de 30° à 45° d'ouverture. Une telle position verrouillée stabilise l'appui de l'organe actionneur 53 sur l'entretoise (non représentée) par contraintes de poussée sur un support.

Avantageusement, les bénéfices de ce positionnement sont multiples, et permettent la continuité d'une production électrique, tout en conservant une certaine luminosité dans le bâti 8, tout en garantissant la stabilité du système mécanique, et notamment lors de conditions météorologies défavorables.

La projection établie par la présence d'au moins un bras porteur 4 améliore considérablement la capture de l'énergie solaire pour des volets 1 exposés à l'est ou à l'ouest, mais aussi dans le cas d'une exposition sud car ledit volet oscillant 1 est positionné hors des ombres portées en raison du déport vertical de son axe de rotation, ce qui permet en outre une amélioration du refroidissement par convexion naturelle dudit volet oscillant 1. L'amélioration du refroidissement du volet 1 est obtenue par la création d'un déport conforme à l'invention. Ce déport permet la création d'un espace interstitiel suffisant entre le bâti 8 et le volet 1, pour permettre une meilleure circulation d'air, et ainsi un meilleur refroidissement par convexion naturelle.

La gestion de l'oscillation du volet 1 est effectuée par télécommande ou à partir d'un système électronique de commande comprenant un API (Automate programmable industriel) qui comprend un microcontrôleur logique (non représenté) associé à une mémoire (non représentée) faisant appel à une table de calculs incorporant le positionnement astronomique et temporel du soleil du lieu d'exploitation, ledit positionnement étant en outre associé à une horloge interne. Ce dernier assure de façon autonome la gestion globale du système (alimentation, commande et surveillance).

Le volet oscillant 1, s'il est équipé d'au moins un panneau photovoltaïque, comporte en outre au moins un micro-convertisseur (ou contrôleur de charge solaire) DC/AC ou DC/DC (non représenté), un circuit de protection fixé sur la partie inférieure du cadre 2, ainsi qu'un circuit de commande et gestion.

En pratique, dans le cas d'un micro-convertisseur DC/AC, ledit micro-convertisseur (non représenté) est raccordé au réseau électrique secteur du bâti 8.

Selon un mode de réalisation alternatif conforme à l'invention, ledit micro-convertisseur est de type DC/DC, et raccordé à une batterie.

En pratique, le volet oscillant 1 selon l'invention comprend au moins une cellule infrarouge configuré pour détecter tout mouvement sous le volet 1, et relié au microcontrôleur logique, de manière à ordonner le redéploiement complet du volet lors de sa phase de repliement si un mouvement est détecté à proximité.

Lesdits micro-convertisseur et circuit de protection sont en outre raccordés au secteur du domicile, ce que permet de réduire les pertes en ligne.

## Revendications

1. [Volet oscillant (1) comprenant :
- un volet (1) destiné à occulter au moins partiellement une fenêtre (6) de bâti (8) et apte à supporter au moins un cadre (2) équipé d'au moins un module de conversion d'énergie solaire (3) ; et
- des moyens d'oscillation angulaire (5) dudit cadre (2) par rapport à l'exposition solaire ; où
les moyens d'oscillation angulaire (5) comprennent au moins un bras porteur (4) supportant ledit cadre (2), **caractérisé en ce que** l'une des extrémités (43) du au moins un bras porteur (4) est articulée en pivot autour d'un barre d'articulation horizontale (52) selon un axe horizontal Z, ladite barre d'articulation horizontale (52) étant fixée à un bâti (8) de fenêtre (6) et déportée verticalement par rapport à un axe l'oxo vertical Y, selon une relation géométrique choisie par rapport au haut d'un tableau de la fenêtre (7), de manière à réduire l'ombre portée sur ledit module de conversion d'énergie solaire (3) grâce à la projection dudit cadre (2) selon l'axe horizontal X; et
- des moyens de fixation (51) disposés sur le bâti (8) selon une relation géométrique choisie par rapport audit haut du tableau de fenêtre (7) de type cadre autoporteur de l'axe d'oscillation, et aptes à recevoir la barre d'articulation horizontale (52) formant axe d'oscillation, et destiné à être articulée avec ladite extrémité (43) dudit bras porteur (4) pour permettre une répartition des contraintes mécaniques ainsi qu'un allègement des efforts sur le bâti (8).

2. Volet oscillant (1) selon la revendication 1, **caractérisé en ce que** les moyens d'oscillation (5) comprennent en outre au moins un organe actionneur (53) comprenant un mécanisme d'entrainement (531) apte à provoquer l'oscillation angulaire dudit cadre (2) de manière séquentielle ou continue selon le plan géométrique d'oscillation XY.

3. Volet oscillant (1) selon la revendication 2, **caractérisé en ce que** le mécanisme d'entrainement (531) de l'organe actionneur (5) appartient au groupe formé par vérin électrique, vérin à vis sans fin, crémaillère, crémaillère latérale, de vis trapézoïdales, chaînes, courroie et câbles entrainé à partir d'au moins un actionneur : moteur à courant continu, moteur à courant alternatif, moteur pas-à-pas, servomoteur, manivelle manuelle.

4. Volet oscillant (1) selon la revendication 2 ou 3, **caractérisé en ce que** l'organe actionneur (53) est équipé d'un moteur débrayable apte à permettre l'orientation manuelle dudit volet oscillant.

5. Volet oscillant (1) selon l'une des revendications 1 à 4, **caractérisé en ce qu'**il comprend au moins un inclinomètre apte à indiquer l'inclinaison dudit cadre (2) par rapport à un plan géométrique choisi.

6. Volet oscillant (1) selon l'une quelconque des revendications 1 à 5, **caractérisé en ce que** le module de conversion d'énergie solaire (3) est de type panneau photovoltaïque.

7. Volet oscillant (1) selon l'une des revendications précédentes, **caractérisé en ce qu'**il comprend au moins deux bras porteurs (4) disposés parallèlement l'un par rapport à l'autre et reliés par au moins une entretoise (41) disposée perpendiculairement entre les deux bras porteurs.

8. Volet oscillant (1) selon l'une des revendications 1 à 7, **caractérisé en ce qu'**il comprend au moins un moyen actionneur (53) de type vérin, dont l'une des extrémités est fixée au cadre (2), et une autre extrémité, mobile, configurée pour être fixée à au moins un organe coulissant (545) sur le cadre (2) du volet (1) ledit organe coulissant (545) comprenant une partie mobile configurée pour rouler sur dans un rail (546) formé par l'intérieur du cadre (2) et solidaire de l'extrémité mobile du moyen actionneur (53), et une partie pivot apte à recevoir au moins un organe de support (54).

9. Volet oscillant (1) selon la revendication 8, **caractérisé en ce que** l'organe de support (54) comprend une structure en deux parties donc la première est longiligne, et la seconde partie est perpendiculaire et solidaire de la première, formant ainsi une équerre (543), et apte à être montée sur la partie pivot de l'organe coulissant (545).

10. Volet oscillant (1) selon l'une des revendications 1 à 8, **caractérisé en ce que** la barre d'articulation horizontale (52) est déportée horizontalement selon l'axe X.

11. Volet oscillant (1) selon l'une des revendications 8 à 10, **caractérisé en ce qu'**il comprend en outre au moins un organe de support (54) comportant une première extrémité (541), formant pivot, et solidaire du haut du tableau de fenêtre (7).

12. Volet oscillant (1) selon l'une des revendications 8 à 10, **caractérisé en ce qu'**il comprend en outre au moins un organe de support (54) comportant une première extrémité (541), formant pivot, et solidaire d'un point choisi sur les parois latérales du tableau de fenêtre (7).

13. Volet oscillant (1) selon l'une des revendications 1 à 12 **caractérisé en ce que** l'oscillation angulaire du cadre (2) est comprise entre 0° et 120° selon le plan géométrique d'oscillation XY.

14. Volet oscillant (1) selon la revendication 13, **caractérisé en ce que** la relation géométrique choisie correspond à une distance au moins égale à 40cm entre le centre d'oscillation et la partie haute du tableau de fenêtre (7) pour une fenêtre de type standard.

## Patentansprüche

1. Schwenkklappe (1), die folgendes umfasst:
- eine Klappe(1), die dazu bestimmt ist, das Fenster (6) in einer Rahmenöffnung (8) zumindest teilweise zu verdunkeln, und dazu geeignet ist, mindestens einen Rahmen (2) zu tragen, der mit mindestens einem Modul (3) zur Umwandlung von Sonnenenergie ausgestattet ist; und
- Mittel zur Winkelschwingung (5) des Rahmens (2) in Bezug auf die Sonneneinstrahlung;
wobei die Mittel zur Winkelschwingung (5) mindestens einen Tragarm (4) umfassen, der den Rahmen (2) trägt, **dadurch gekennzeichnet, dass** eines der Enden (43) des mindestens einen Tragarms (4) auf einer horizontalen Achse Z um eine horizontale Gelenkstange (52) schwenkbar gelagert ist, wobei die horizontale Gelenkstange (52) in der Rahmenöffnung (8) eines Fensters (6) befestigt ist und zu einer vertikalen Achse Y in einer ausgewählten geometrischen Verhältnis, das in Bezug auf den oberen Teil einer Fensterlaibung (7) ausgewählt wird, vertikal versetzt ist, so dass der Schatten, der durch die Projektion des Rahmens (2) auf der horizontalen Achse X auf das Modul zur Umwandlung von Sonnenenergie (3) geworfen wird, reduziert wird; und
- Befestigungsmittel (51), die an der Rahmenöffnung (8) in einer geometrischen Beziehung angeordnet sind, die in Bezug auf den oberen Teil der Fensterlaibung (7), welche ein selbsttragender Rahmen der Schwingachse ist, ausgewählt wird, und die horizontale, die Schwingachse bildende Gelenkstange (52) aufnehmen können, wobei diese dazu bestimmt ist, mit dem Ende (43) des Tragarms (4) gelenkig verbunden zu werden, um eine Verteilung der mechanischen Beanspruchung sowie eine Verringerung der Krafteinwirkung auf die Rahmenöffnung (8) zu ermöglichen.

2. Schwenkklappe (1) nach Anspruch 1, **dadurch gekennzeichnet, dass** die Schwingungsmittel (5) außerdem mindestens ein Stellglied (53) mit einem Antriebsmechanismus (531) umfassen, der die Winkelschwingung des Rahmens (2) sequentiell oder kontinuierlich auf der geometrischen Schwingungsebene XY bewirken kann.

3. Schwenkklappe (1) nach Anspruch 2, **dadurch gekennzeichnet, dass** der Antriebsmechanismus (531) des Stellglieds (5) einer Gruppe angehört, die aus einem elektrischen Zylinder, einem Schneckenzylinder, einer Zahnstange, einer seitlichen Zahnstange, Trapezspindeln, Ketten, einem Riemen und Seilen besteht und von mindestens einem Stellglied - einem Gleichstrommotor, Wechselstrommotor, Schrittmotor, Servomotor oder einer Handkurbel - angetrieben wird.

4. Schwenkklappe (1) nach Anspruch 2 oder 3, **dadurch gekennzeichnet, dass** das Stellglied (53) mit einem auskuppelbaren Motor ausgestattet ist, der die manuelle Ausrichtung der Schwenkklappe ermöglicht.

5. Schwenkklappe (1) nach einem der Ansprüche 1 bis 4, **dadurch gekennzeichnet, dass** sie mindestens einen Neigungsmesser umfasst, der die Neigung des Rahmens (2) in Bezug auf eine ausgewählte geometrische Ebene anzeigen kann.

6. Schwenkklappe (1) nach einem der Ansprüche 1 bis 5, **dadurch gekennzeichnet, dass** das Modul zur Umwandlung von Sonnenenergie (3) ein Solarpaneel ist.

7. Schwenkklappe (1) nach einem der vorhergehenden Ansprüche, **dadurch gekennzeichnet, dass** sie mindestens zwei Tragarme (4) umfasst, die parallel zueinander angeordnet und durch mindestens eine senkrecht zwischen den beiden Tragarmen angeordnete Strebe (41) verbunden sind.

8. Schwenkklappe(1) nach einem der Ansprüche 1 bis 7, **dadurch gekennzeichnet, dass** sie mindestens ein Stellmittel (53) vom Typ Zylinder umfasst, dessen eines Ende am Rahmen (2) befestigt ist, und dessen anderes, bewegliches Ende so gestaltet ist, dass es an mindestens einem Gleitelement (545) auf dem Rahmen (2) der Klappe (1) befestigt werden kann, wobei das Gleitelement (545) einen beweglichen Teil umfasst, der so gestaltet ist, dass er auf bzw. in einer Schiene (546), die durch die Innenseite des Rahmens (2) gebildet wird und fest mit dem beweglichen Ende des Stellmittels (53) verbunden ist, rollen kann, und einen schwenkbaren Teil, der mindestens ein Trägerelement (54) aufnehmen kann.

9. Schwenkklappe (1) nach Anspruch 8, **dadurch gekennzeichnet, dass** das Trägerelement (54) eine zweiteilige Struktur umfasst, deren erster Teil langgezogen ist, und deren zweiter Teil senkrecht zum ersten Teil stehend fest damit verbunden ist, so dass es einen Winkel (543) bildet und an dem schwenkbaren Teil des Gleitelements (545) montiert werden kann.

10. Schwenkklappe (1) nach einem der Ansprüche 1 bis 8, **dadurch gekennzeichnet, dass** die horizontale Gelenkstange (52) auf der Achse X horizontal versetzt ist.

11. Schwenkklappe (1) nach einem der Ansprüche 8 bis 10, **dadurch gekennzeichnet, dass** sie des Weiteren mindestens ein Trägerelement (54) umfasst mit einem ersten Ende (541), das einen Drehpunkt bildet und fest mit dem oberen Teil der Fensterlaibung (7) verbunden ist.

12. Schwenkklappe (1) nach einem der Ansprüche 8 bis 10, **dadurch gekennzeichnet, dass** sie des Weiteren mindestens ein Trägerelement (54) umfasst mit einem ersten Ende (541), das einen Drehpunkt bildet und mit einem ausgewählten Punkt an den Seitenwänden der Fensterlaibung (7) fest verbunden ist.

13. Schwenkklappe (1) nach einem der Ansprüche 1 bis 12, **dadurch gekennzeichnet, dass** die Winkelschwingung des Rahmens (2) auf der geometrischen Schwingungsebene XY in einem Bereich zwischen 0° und 120° liegt.

14. Schwenkklappe (1) nach Anspruch 13, **dadurch gekennzeichnet, dass** die ausgewählte geometrische Beziehung bei einem Standardfenster einem Abstand von mindestens 40 cm zwischen dem Schwingungsmittelpunkt und dem oberen Teil der Fensterlaibung entspricht.

## Claims

1. [Oscillating shutter (1) comprising:
- a shutter (1) designed to at least partially conceal a window (6) of a structure (8) and capable of supporting at least one frame (2) equipped with at least one solar energy conversion module (3); and
- means for angular oscillation (5) of said frame (2) with respect to the solar exposure;
wherein the means for angular oscillation (5) comprise at least one support arm (4) supporting said frame (2), **characterised in that** one of the ends (43) of the at least one support arm (4) is articulated in a pivotal manner about a horizontal articulation bar (52) along a horizontal axis Z, said horizontal articulation bar (52) being fixed to a structure (8) of the window (6) and offset vertically in relation a vertical axis Y, according to a geometric relationship chosen with respect to the top of a panel of the window (7), so as to reduce the shadow cast on said solar energy conversion module (3) by virtue of the projection of said frame (2) along the horizontal axis X; and
- fixing means (51) of the oscillation axis of the self-supporting frame type arranged on the structure (8) in a chosen geometric relationship in relation to the said top of the window panel (7), and capable of receiving the horizontal articulation bar (52) forming the oscillation axis, and intended to be articulated with the said end (43) of the said support arm (4) in order to allow the distribution of mechanical stresses as well as a lightening of the forces on the structure (8).

2. Oscillating shutter (1) according to claim 1, **characterised in that** the means of oscillation (5) furthermore comprise at least one actuator member (53) comprising a drive mechanism (531) capable of causing the angular oscillation of said frame (2) sequentially or continuously according to the geometrical plane of oscillation XY.

3. Oscillating shutter (1) according to claim 2, **characterised in that** the drive mechanism (531) of the actuator member (5) belongs to the group of electrical cylinders, worm gear cylinders, toothed racks, lateral toothed racks, trapezoidal worms, chains, belts and cables driven by at least one actuator: direct current motor, alternating current motor, stepper motor, servomotor, manual crank handle.

4. Oscillating shutter (1) according to claim 2 or 3, **characterised in that** the actuator member (53) is equipped with a disengageable motor capable of allowing manual orientation of said oscillating shutter.

5. Oscillating shutter (1) according to any of claims 1 to 4, **characterised in that** it comprises at least one inclinometer capable of indicating the inclination of said frame (2) in relation to a selected geometrical plane.

6. Oscillating shutter (1) according to any one of claims 1 to 5, **characterised in that** the solar energy conversion module (3) is of the photovoltaic panel type.

7. Oscillating shutter (1) according to any of the preceding claims, **characterised in that** it comprises at least two support arms (4) arranged parallel to each other and connected by at least one spacer (41) arranged perpendicularly between the two support arms.

8. Oscillating shutter (1) according to any of claims 1 to 7, **characterised in that** it comprises at least one actuator means (53) of the cylinder type, one end of which is fixed to the frame (2), and another, mobile end, configured to be fixed to at least one sliding member (545) on the frame (2) of the shutter (1), said sliding member (545) comprising a mobile part configured to run on a rail (546) formed by the inside of the frame (2) and integral with the mobile end of the actuator means (53), and a pivot part capable of receiving at least one support member (54).

9. Oscillating shutter (1) according to claim 8, **characterised in that** the support member (54) comprises a two-part structure, the first of which is elongated, and the second part of which is perpendicular and integral with the first, thus forming an angle (543), and capable of being mounted on the pivot part of the sliding member (545).

10. Oscillating shutter (1) according to any of claims 1 to 8, **characterised in that** the horizontal articulation bar (52) is horizontally offset along the X axis.

11. Oscillating shutter (1) according to any of claims 8 to 10, **characterised in that** it furthermore comprises at least one support member (54) comprising a first end (541), forming a pivot, and integral with the top of the window panel (7) .

12. Oscillating shutter (1) according to any of claims 8 to 10, **characterised in that** it furthermore comprises at least one support member (54) comprising a first end (541), forming a pivot, and integral with a point selected on the side walls of the window panel (7).

13. Oscillating shutter (1) according to any of claims 1 to 12, **characterised in that** the angular oscillation of the frame (2) is between 0° 120° according to the geometrical plane of oscillation XY.

14. Oscillating shutter (1) according to claim 13, **characterised in that** the chosen geometrical relationship corresponds to a distance of at least 40cm between the centre of oscillation and the top of the window panel for a standard type of window.
